# EUROPEAN PATENT APPLICATION

(11) **EP 4 847 159 A1**
(43) Date of publication of application: **02.12.2026**
(21) Application number: 26167920.3
(22) Date of filing: 26.03.2026
(51) Int. Cl.: B21D 43/02, B21C 51/00

(54) **A METHOD AND AN APPARATUS FOR MARKING ELECTRODES FOR THE PRODUCTION OF ELECTRICAL ENERGY STORAGE DEVICES**

(30) Priority: 27.05.2025 IT 202500012154
(71) Applicant: Fameccanica.Data S.p.A., 66020 San Giovanni Teatino (CH) (IT)
(72) Inventor: GUALTIERI, Diego, I-66020 San Giovanni Teatino (Chieti) (IT); CIPRIANI, Alessandro, I-66020 San Giovanni Teatino (Chieti) (IT)
(74) Representative: Buzzi, Notaro & Antonielli d'Oulx S.p.A.

(57) **Abstract**

An apparatus (10) and a method for marking electrodes (100), comprising at least one marking device (11) disposed in association with the sheet (110) from which the electrodes (100) are obtained and having at least one punching member (14) configured to perform at least one punching (50) on the sheet (110).

## Description

### Field of the invention

The present invention relates to a method and an apparatus for marking to then identify one or more electrodes, stackable one on top of the other to form a cell for producing devices, or batteries, for electrical energy storage.

In particular, the marking is performed on non-conforming and/or defective electrodes and occurs downstream of a cutting and shaping step, also known as a notching step, to then identify and discard such non-conforming electrodes before a subsequent step of forming conductive single cells, also known as a stacking or winding step.

Here and in the following description, for descriptive convenience and non-limitingly, the term electrode will be used, meaning a multilayer substantially composed of a base conductive metal sheet, such as for example copper (Cu) or aluminum (Al), coated on one or both sides with a protective layer, or coating, of dielectric material.

### Prior art

Known are lines for the production of sets of electrode and separator layers stacked one on top of the other, generally indicated by the term conductive single cells, intended for arrangement in stacks to obtain cells used, typically, for the production of devices, or batteries, for electrical energy storage, for example of the type known as prismatic batteries or "pouch", "Z-folding", or other types.

Typically, electrodes are obtained starting from a continuous sheet of base conductive metal (Cu or Al) coated on one or both sides with a protective layer, or coating, of dielectric material. The continuous sheet thus composed is shaped, or in any case cut, from at least one side, so as to define desired protrusions, or tabs, which are conductive, during a step known as notching, to then be wound into a coil and sent to subsequent step of unwinding, separation into single electrodes, and stacking of the latter, for the forming of single cells, in subsequent steps, so-called stacking steps.

It is also known that, in the normal notching process, considering also the thicknesses and production speeds involved, the mechanical action of shaping and cutting can cause defects and/or imperfections on the base metal sheet, which imperfections then negatively affect the quality of the formed single cells.

Therefore, since winding into a coil of the base metal sheet exiting the notching step is planned, these imperfections must necessarily be marked, before winding into the coil, so that they can be identified after the subsequent unwinding, eliminating the non-conforming or defective electrodes before the stacking step.

Known, in this sense, are marking apparatuses that use inline printing technologies for the defective parts. These latter solutions can mark the defects with paints, such as traditional or UV inks, or perform a permanent laser engraving.

The solutions that involve the use of paints, in addition to requiring ink management, can contaminate, i.e., "dirty", parts of the base metal sheet that are not affected by the defects, potentially falsifying, at least in part, the elimination of non-conforming electrodes.

The solutions that involve laser engraving require high-cost equipment, and the engraving itself produces toxic fumes due to the burning of the coating, which must still be purified and disposed of, with related management costs.

Also known are solutions of marking apparatuses that use a fixed drilling member with a high-speed punch, in which the base material sheet is made to slide continuously through the drilling member itself and the punch intervenes orthogonally on the sheet at the location of the defect to be marked.

One of the drawbacks associated with the use of such marking solutions with a fixed drilling member is related to the production speed, i.e., the feeding speed of the base metal sheet. In fact, however quickly the punch can intercept the metal sheet orthogonally, perforating it at least partially, such punching determines a consequent punctual stop, albeit for minimal instants and only in the punching area. Consequently, to avoid misalignments, or the formation of wrinkles, of the metal sheet, the production speeds must be limited to values around 40 m/min, defining a substantial bottleneck for the productivity of the entire line.

There therefore exists the need to perfect a method and an apparatus for marking electrodes, for the production of electrical energy storage devices, which can overcome at least one of the drawbacks of the prior art.

To do this, it is necessary to solve the technical problem of performing an effective and rapid marking of defective and non-conforming electrodes, in line with the productivity of the rest of the production process, i.e., of not acting as a bottleneck for the production speed.

### Object and summary of the invention

The present invention aims to achieve an apparatus, and develop a method, for marking electrodes wherein, while guaranteeing effective marking of defects, these are applied with contained and optimized timings relative to the rest of the production line, and do not create interference with the advancement of the metal sheets.

Another object of the present invention is to realize an apparatus that allows reducing the costs related to the steps of marking defective electrodes.

According to the present invention, this object is achieved by a method having the features forming the subject of claim 1 and by a machine having the features of claim 2.

Preferred embodiments form the subject of the dependent claims.

The claims form an integral part of the technical teaching provided in relation to the invention.

### Brief description of the drawings

The invention will now be described in detail with reference to the accompanying drawings, given by way of non-limiting example only, wherein:
- Fig. 1 illustrates in axonometry a marking apparatus according to the present invention;
- Fig. 2 schematically illustrates in plan view the apparatus of Fig. 1;
- Figs. 3a and 3b schematically illustrate in section a detail of the apparatus of Fig. 1, in an operational sequence; and
- Figs. 4 and 5 schematically illustrate two possible variants of the apparatus of Fig. 1.

It will be appreciated that the various figures may not be drawn to the same scale. It will also be appreciated that some elements or components may not be illustrated to better show others and to simplify the understanding of the figures.

### Detailed description

With reference to the embodiments represented in the accompanying figures, an apparatus 10 according to the present invention is used for marking, i.e., identification by means of a punching 50, of electrodes 100 that present defects 200, relative to a conforming production.

Briefly, the electrodes 100 are of the type used for forming stackable conductive single cells to form a cell for the production of devices, or batteries, for electrical energy storage. The electrodes 100 are obtained starting from a continuous sheet 110 of base conductive metal (Cu or Al) coated, in this specific case on both sides, with a protective layer, or coating 120, of dielectric material and, subsequently cut so as to define desired protrusions, or tabs 150, which are conductive, in an operational step known as notching. It is precisely in this step that defects 200 can appear, which are the object of the need for marking by punching 50, so as to be able to identify and discard the non-conforming electrodes 100, before the subsequent steps of forming the single cells, in an operational step known as stacking.

In the accompanying figures, the electrodes 100 are indicated and delimited with dashed lines, since in the production steps where the apparatus 10, and the method, according to the present invention are applied, the electrodes 100 are still part of a single sheet 110 that is rolled into a coil after cutting, to be transported and then unrolled and divided into single electrodes 100, some of which, precisely marked with the punching 50, are to be discarded.

In this step, the sheet 110, together with the relative coating 120, is fed along a feeding direction FD at a determined feeding speed V1, by means of feeding means, for example rollers, belts or others, of a substantially known type and not represented in the drawings.

The apparatus 10 according to the present invention substantially comprises a plurality of marking devices 11, in this specific case four, a moving member 12 and a phase-adjustment member 13.

Each marking device 11 is mounted, as we will see, on the moving member 12 in association with the sheet 110 and has a punching member, or punch 14, configured to perform the punching 50 on the sheet 110, at the location of the electrodes 100 that present the defects 200. The punch 14 is disposed substantially orthogonal to the sheet 110, at least in a punching position, in which the possible punching 50 on the sheet 110 is executed. In the marking position, the marking device 11 is operatively disposed in association with the sheet 110 and its punching member 14 moves at an operational speed V2 correlated to the feeding speed V1. Here and in the following description and claims, by the term correlated is meant an operational speed V2 that is both concordant and substantially equivalent to the feeding speed V1. In other words, the two speeds, operational and feeding respectively, are substantially equal to each other. In this way, the punching member 14 is in a dynamic operational condition, relative to the sheet 110, with speed and direction substantially concordant with those of the latter. In other words, the punching member 14 performs the intended punching 50 during a movement substantially in pursuit of the sheet 110. This dynamic coordination between the punching member 14 and the sheet 110 ensures that any punctual and relative stop of the sheet, albeit only in the punching area, is minimized, almost to the point of being completely canceled, in any case without requiring substantial limitations to the production speeds which, with the solution according to the present invention, can reach even 80 m/min and beyond, up to 120 m/min. Therefore, with the solution according to the present invention, it is possible to perform an effective and rapid marking of defective electrodes, in line with the productivity of the rest of the production process, substantially without acting as a production bottleneck.

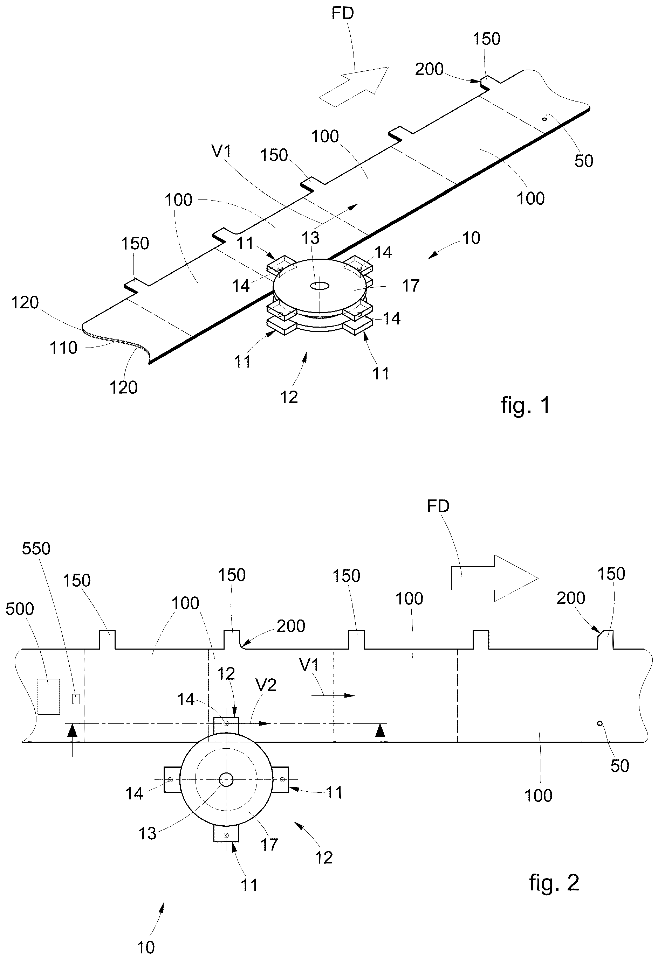

For clarification purposes, upstream of the moving member 12 and, substantially of the apparatus 10, an identification camera 500 can advantageously be provided, for example of the HS (High Sensitivity) type, arranged to identify the defects 200 on the electrodes 100, so as to command, or not, the activation of the punch 14 and, therefore, perform or not the relative punching 50. The camera 500 is advantageously positioned at a determined distance from the apparatus 10 (not identified in fig. 2), such as to guarantee the time necessary for the command and the correlated activation of the apparatus 10.

In advantageous embodiments, still upstream of the moving member 12 and, substantially of the apparatus 10, a sensor 550 can advantageously be provided, which identifies defects 200 arising from other steps of the electrode 100 manufacturing process, which must still be marked with the punching 50.

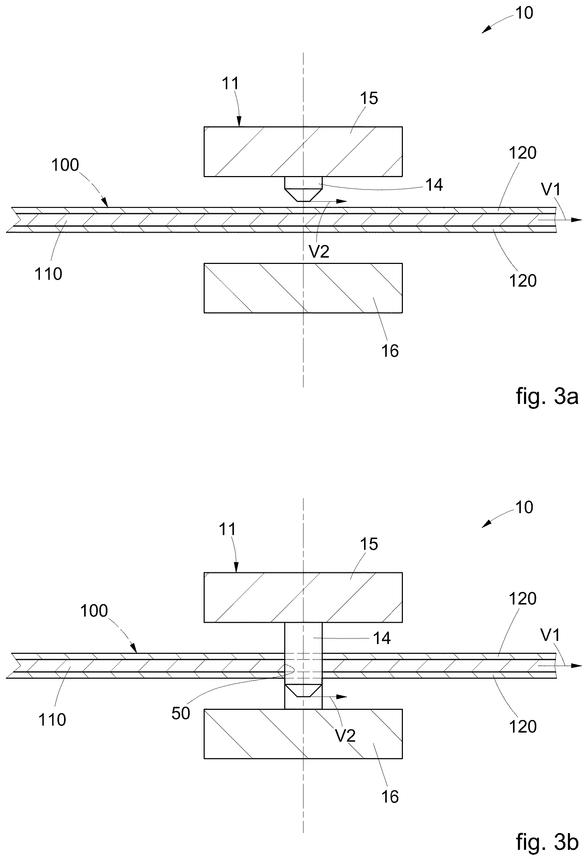

Furthermore, with particular reference to the operational sequence represented in figs. 3a and 3b, each marking device 11 comprises a first portion 15 disposed on an upper side of the sheet 110 and configured to operatively support the punch 14, and a second portion 16 disposed on a lower side of the sheet 110, i.e., substantially opposite the first portion 15, to counteract the punching action of the punch 14, and shaped so as to allow the cutting of the sheet 110, with a punching effect.

The moving member 12 is, in the embodiment illustrated in figs. 1 and 2, defined by a carousel element, or more simply carousel 17, or disk, operatively disposed substantially coplanar to the sheet 110, and relative to which the marking devices 11 are radially mounted, angularly offset from each other.

The carousel 17 is disposed rotating in operative association with the sheet 110 and is configured to rotate to selectively, and in sequence, move each marking device 11 into a punching position, in which it cooperates with the sheet 110.

The carousel 17 rotates, at least when each marking device 11 is at the punching position, at a peripheral rotational speed, such as to move the punch 14 at an operational speed V2 correlated, i.e., concordant and at least equivalent, to the feeding speed V1. According to some variants of this advantageous solution, the carousel 17 can be disposed, rotationally, either substantially coplanar to the sheet 110, or substantially orthogonal, or inclined, relative to the sheet 110 itself. Advantageously, each marking device 11 is mounted movably radially relative to the carousel 17, so that the punch 14 can have a movement component substantially orthogonal to the feeding direction FD, relative to the plane of the sheet 110, at least in the punching position. In this way, during the active punching step, the radial component of the circular movement direction of the punch 14 can be compensated, completely avoiding any deviation from the linearity of movement of the sheet 110. In accordance with an advantageous embodiment of the solution according to the present invention, the carousel 17 comprises a plurality of marking devices, for example two, three, four or more, which are disposed angularly offset from each other and are rotated in sequence into the punching position. In this way, the rotation of the carousel element and the movement of the marking devices are optimized as a function of the feeding speed of the sheet 110, particularly in cases requiring closely spaced punchings.

The phase-adjustment member 13, only schematized in figs. 1 and 2, is disposed in kinematic association with the carousel 17 and is configured to selectively phase, i.e., accelerate or decelerate, the rotation of the carousel 17, i.e., the movement of each of the marking devices 11, towards the punching position, relative to the feeding speed V1 of the sheet 110. In this way, the carousel element 17 or, the moving member 12, can be kept always in motion by managing accelerations and decelerations of the marking devices, so as to guarantee a constant distance of the punching member 14 from the possible area of the sheet to be punched, i.e., ensuring that the punching member 14 is always in a ready-to-activate position and can perform its functionalities at the intended operational speed.

The phase-adjustment member 13 can advantageously comprise an electronic cam system, or a mechanical, or hybrid, system to coordinate the rotational speed of the carousel 17 to the sheet 110.

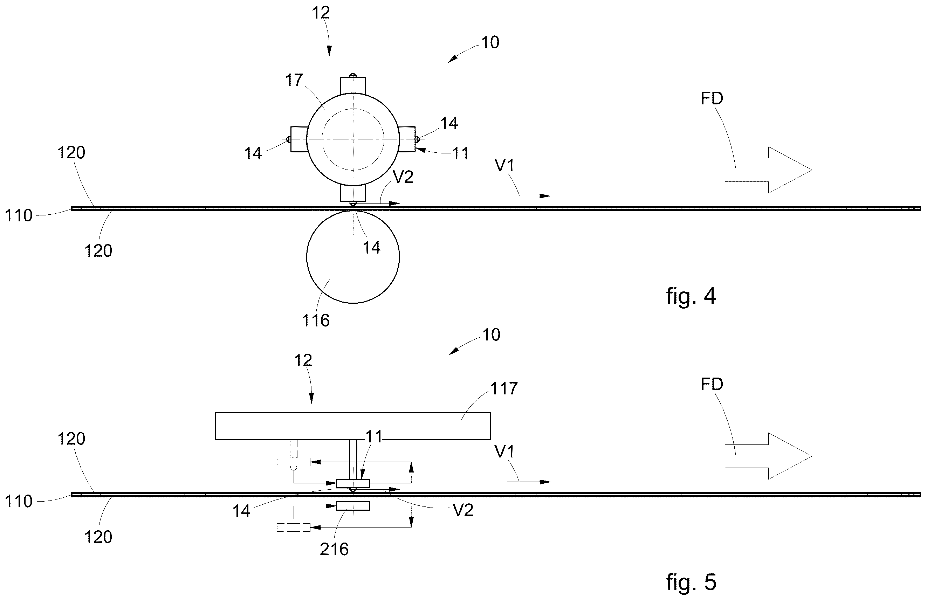

In the embodiment schematized in fig. 4, the moving member 12 is still defined by the carousel 17, relative to which the marking devices 11 are radially mounted, angularly offset from each other.

In this case, unlike the previous one, the carousel 17 is operatively disposed substantially orthogonal to the sheet 110, or inclined at a determined angle relative to the latter, while still rotating at a peripheral rotational speed, such as to move the marking devices 11 at an operational speed V2 correlated, i.e., concordant and at least equivalent to the feeding speed V1. Operatively, in solutions like these, a rotating counter element 116 might be necessary, as well as identifying a cutting head instead of the punch 14, identified so far, but still for the purpose of marking with a punching 50 the electrodes 100 presenting relative defects 200.

In the embodiment schematized in fig. 5, the moving member 12 is defined by a linear guide 117 configured to support and move the marking device 11 with the punch 14.

In this case, as schematized with the arrows and unlike the previously schematized solutions, the marking device 11 is moved linearly with operational speed V2, concordant and at least equivalent to the feeding speed V1, and is then cyclically returned to an initial starting condition to then go and pursue the sheet 110, and execute the possible punching 50.

Also in this alternative embodiment, operatively, a counter element 216 might be necessary, which follows the movement of the marking device 11 in a mirror-like fashion.

It is clear that modifications and/or additions of parts can be made to the apparatus 10 and the method described so far, without thereby departing from the scope of the present invention as defined by the claims.

Naturally, the principle of the invention remaining the same, the details of construction and the embodiments may be widely varied with respect to what has been described and illustrated, without thereby departing from the scope of the invention as defined by the claims that follow.

## Claims

1. A method for marking electrodes (100) for the production of electrical energy storage devices, obtained from a base metal sheet (110) fed along a feeding direction (FD) at a determined feeding speed (V1), comprising:
- a marking step in which by at least one marking device (11) associated with said sheet (110) and having at least one punching member (14), at least one punching (50) is performed on said sheet (110),
- at least one moving step in which, by a moving member (12) on which said at least one marking device (11) is mounted, said marking device (11) is selectively moved in at least one punching position where it is placed in association with said sheet (110) and moves at an operational speed (V2) correlated to said feeding speed (V1),
- a phasing step in which by at least one phase-adjustment member (13) placed in kinematic association with said moving member (12), the movement of said at least one marking device (11) towards said punching position is selectively phased relative to said feeding speed (V1) of said sheet (110).

2. An apparatus (10) for marking electrodes (100) for the production of electrical energy storage devices, obtained from a metal sheet (110) fed along a feeding direction (FD) at a determined feeding speed (V1), comprising at least one marking device (11) disposed in association with said sheet (110) and having at least one punching member (14), comprising:
- at least one moving member (12) on which said marking device (11) is mounted and configured to selectively move said marking device (11) at least into a punching position where said punching member (14) is disposed in association with said sheet (110) and moves at an operational speed (V2) correlated to said feeding speed (V1), and
- at least one phase-adjustment member (13) disposed in kinematic association with said moving member (12) and configured to selectively phase the movement of said at least one marking device (11) towards said punching position relative to said feeding speed (V1) of said sheet (110).

3. An apparatus (10) according to claim 2, wherein said moving member (12) comprises at least one rotating carousel element (17), or disk, having a peripheral rotational speed such as to rotate said marking device (11) at said operational speed (V2), at least in said punching position.

4. An apparatus (10) according to claim 3, wherein said carousel element (17) comprises a plurality of marking devices (11) disposed angularly offset from each other and rotatable in sequence into said punching position.

5. An apparatus (10) according to any of claims 2-4, comprising at least one phase-adjustment member (13) disposed in kinematic association with said moving member (12) and configured to selectively phase the movement of said at least one marking device (11) towards said punching position, relative to said feeding speed (V1) of said sheet (110).

6. An apparatus (10) according to any of claims 3-5, wherein said at least one marking device (11) is mounted selectively movable in a radial direction relative to said carousel element (17).

7. An apparatus (10) according to any of claims 2-6, wherein said at least one marking device (11) comprises a first portion (15) disposed, at least in said punching position, on one side of said sheet (110) and configured to support said punching member (14), and a second portion (16) disposed on an opposite side of said sheet (110), relative to said first portion (15) at least in said punching position, and configured to counteract the punching action of said punching member (14).

8. An apparatus (10) according to any of claims 2-7, wherein said moving member (12) is operatively disposed substantially coplanar to said sheet (110), or substantially orthogonal, or inclined, relative to said sheet (110).

9. A marking device (11) for base sheets (110) intended for the formation of electrodes, having at least one punching member (14), comprising:
- at least one moving member (12) configured to selectively move said marking device (11) at least into a punching position where said punching member (14) is disposed in association with said sheet (110) and moves at an operational speed (V2) correlated to said feeding speed (V1), and
- at least one phase-adjustment member (13) disposed in kinematic association with said moving member (12) and configured to selectively phase the movement of said at least one marking device (11) towards said punching position relative to said feeding speed (V1) of said sheet (110).

10. A device according to claim 9, wherein said moving member (12) comprises at least one rotating carousel element (17), or disk, having a peripheral rotational speed such as to rotate said marking device (11) at said operational speed (V2), at least in said punching position.
